# EUROPEAN PATENT APPLICATION

(11) **EP 2 109 068 A1**
(43) Date of publication of application: **14.10.2009**
(21) Application number: 09001409.3
(22) Date of filing: 02.02.2009
(51) Int. Cl.: G06K 19/07, G06K 19/077, H01Q 23/00

(54) **Radio frequency identification tag and method of fabricating the same**

(30) Priority: 08.04.2008 JP 2008099868
(71) Applicant: Hitachi Ltd., Chiyoda-ku Tokyo 100-8280 (JP)
(72) Inventor: Sakama, Isao, Tokyo 100-8220 (JP)
(74) Representative: Strehl Schübel-Hopf & Partner

(57) **Abstract**

A RFID tag adapted to control goods is provided which has two functions of a magnetic tag (2) and of a RFID tag mounted with an IC chip (3) and can widen the communication range of the RFID tag. The RFID tag is one which is mounted with an IC chip (3) capable of receiving and transferring information from and to the outside in a non-contact fashion. Structurally, the RFID tag comprises a first antenna (1) having electrical conductivity and mounted with the IC chip (3) and a second antenna (2) made of a soft magnetic material and electrically connected to the first antenna (1).

## Description

### BACKGROUND OF THE INVENTION

The present invention relates to a radio frequency identification (RFID) tag adapted to transmit, at a radio frequency, information such as identification (ID) recorded on an IC chip.

As a means for preventing an unjust action of taking out goods and the like, a crime prevention tag called a sensible marker or magnetic tag made of a magnetic material has been employed. The sensible marker is formed of a soft magnetic member and it is affected by the Barkhausen effect attributable to an alternating magnetic field generated by a gate unit located at the entrance, for example, to generate a voltage pulse in a detection coil inside the gate unit.

Accordingly, as a person bringing an article attached with a sensible marker passes through a gate, the gate unit detects a voltage pulse to raise an alarm sound.

Another type of sensible marker is also available which does not raise an alarm in association with takeout goods having passed a legal takeout procedure. In this type of sensible marker, a semi-hard magnetic material is laid on a soft magnetic member and the semi-hard magnetic material is so controlled as to be magnetized or as not to be magnetized in order that the Barkbaousen effect the soft magnetic member exhibits can be controlled. Then, the voltage pulse is generated controllably in the detection coil inside the gate unit to make discrimination between a legal takeout and an illegal takeout.

JP-A-2004-227508 discloses in Fig. 1 a security tag using in combination a sensible marker made of a foil layer of soft magnetic material and a RFID tag having an IC chip at a location not in register with the foil layer.

By the technique described in JP-A-2004-227508 as above, the function to make surveillance of goods on the basis of magnetic sensing and the goods control having resort to the RFID tag adapted to receive and transmit information of an IC chip through radio communication can be achieved. In the above Patent Document, however, the soft magnetic member operative with magnetism and the radio tag mounted with an IC chip are juxtaposed, raising a problem that when the soft magnetic foil approaches an antenna for RFID, the antenna characteristics of the RFID tag changes and an originally designed communication distance cannot be obtained, preventing the intimately close arrangement. As a result, disadvantageously, the size of the tag increases or the RFID readable direction is limited.

### SUMMARY OF THE INVENTION

The present invention contemplates elimination of the above problems and has for its object to provide a RFID tag for goods control which has two functions of a magnetic tag and of a RFID tag mounted with an IC chip and which has the ability to widen the communication range of the RFID tag.

To accomplish the above object, a RFID tag according to this invention is constructed as follows. More particularly, the RFID tag of the present invention is one which is mounted with an IC chip capable of receiving and transferring information externally in a non-contact fashion and an electrically conductive antenna mounted with the IC chip is one at least part of which is magnetized. This type of antenna can be materialized by providing the antenna with a magnetic portion or quarter. In an alternative, this may be materialized within a framework of this invention by an antenna structure having a first antenna which is electrically conductive and mounted with the IC chip and a second antenna which is magnetic and electrically conductive. Then, information stored in the IC chip may be transmitted by way of the first and second antennas. In this case, the first and second antennas may be interconnected electrically.

How to arrange the sensible marker (magnetic tag) made of a magnetic material and the antenna for transmission of information of the IC chip (or the IC chip per se) in a predetermined positional relationship is also involved in the present invention.
Specifically, the antenna may be arranged in series with the sensible marker in the length (longitudinal) direction of the RFID tag and located at an end of the RFID tag. Further, according to teachings of the invention, the RFID tag may be attached to an attaching target object in such a way that the antenna (or the IC chip) may be located at an end of the object. In this case, according to an embodiment of the invention, a plurality of attaching target objects may be mounted with the RFID tags in a manner as above, respectively, with ends of the attaching target objects aligned and pieces of information may be read out of these RFID tags. For example, when the RFID tag is attached to the backbone of a book and the book attached with the RFID tag is leaned against a bookshelf, the antenna (or IC chip) is positioned substantially horizontally, thus facilitating readout of pieces of information concerning a plurality of books.

Preferably, in the present invention, a soft magnetic material is used for the magnetic member.

According to the RFID tag, the magnetic tag function can efficiently coexist with the RFID tag function.

Other objects, features and advantages of the invention will become apparent from the following description of the embodiments of the invention taken in conjunction with the accompanying drawings.

### BRIEF DESCRIPTION OF THE DRAWINGS

Figs. 1A, 1B and 1C are diagrams showing a tag antenna structure according to an embodiment of the present invention.
Figs. 2A and 2B are diagrams showing a conventional tag antenna structure.
Fig. 3A is a diagram useful to explain a tag attaching position in a first embodiment of the present invention.
Fig. 3B is a diagram useful to explain a tag attaching position in a conventional structure.
Figs. 4A and 4B are diagrams useful to explain a RFID tag communication range in the first embodiment of the invention.
Fig. 5 is a graph showing the relation between the length of a second antenna and the communication distance.
Fig. 6 is a graph showing the relation between the length of a first antenna and the communication distance.
Fig. 7 is a diagram illustrating an example of an application of the RFID tag in the first embodiment of the invention.
Fig. 8 is a diagram showing a method of reading the RFID in the first embodiment of the invention.
Figs. 9A and 9B are diagrams showing a second embodiment of the invention.
Figs. 10A, 10B and 10C are diagrams useful to explain a method of forming an antenna in the second embodiment of the invention.
Figs. 11A, 11B, 11C, 11D and 11E are diagrams showing positions where an antenna is cut out of a soft magnetic member in the second embodiment of the invention.
Figs. 12A and 12B are diagrams useful to explain a process of fabricating the RFID tag in the second embodiment of the invention.
Figs. 13A, 13B and 13C are diagrams illustrative of an example of a tag antenna according to a third embodiment of the invention.
Figs. 14A and 14B are diagrams useful to explain another example of the tag antenna in the third embodiment of the invention.
Fig. 15A, 15B and 15C are diagrams illustrative of a tag antenna according to a fourth embodiment of the invention.
Fig. 16A, 16B, 16C and 16D are diagrams useful to explain the connection between the IC chip and the antenna.

### DESCRIPTION OF THE EMBODIMENTS

Preferred embodiments of the present invention will now be described by making reference to the accompanying drawings.

### «first Embodiment»

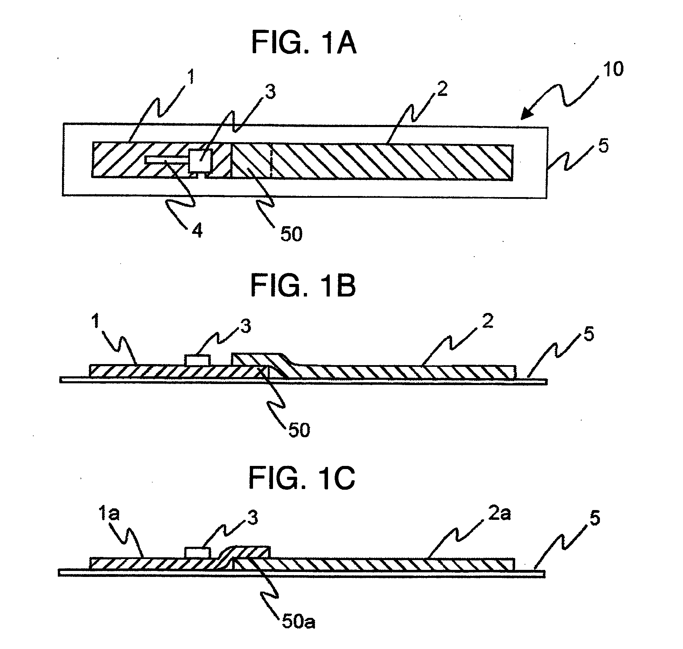

Referring first to Figs. 1A, 1B and 1C, a REID tag according to a first embodiment of the invention will be described. Illustrated in Fig. 1A is a fundamental shape of a RFID tag 10 in the present embodiment. Structurally, a RFID portion or quarter mounted with an IC chip 3 on a first antenna 1 made of an electrical conductor is electrically connected to a second antenna 2 made of a soft magnetic material. Formed in the first antenna 1 is an L-shaped slit 4 for making impedance matching between the first antenna 1 and the IC chip 3 to assist the first antenna in impedance matching with the IC chip. A method of connecting the first antenna 1 and the IC chip 3 will be described later. The first antenna 1 overlaps the second antenna 2 at a portion 50 where the two antennas of electrical conductors contact directly with each other or they are electrically connected through the medium of adhesive or bonding agent not shown. The first and second antennas 1 and 2 are held by a base film 5.

As a material of the first antenna, such a metal as Al, Cu or Ag can be used. In the present embodiment, an Al foil having a thickness of 10µm is used. As a material of the second antenna 2, Permalloy, B-C-Fe alloy or amorphous metal, for example, an amorphous metal containing Co-Fe-Si-B as a principal component is available.

The RFID tag structure as viewed laterally thereof is illustrated in Fig. 1B. The IC chip 3 is mounted on the first antenna 1 and the second antenna 2 overlies the first antenna 1 at the overlap portion 50.

In a form shown in Fig. 1C, the overlap of the first and second antennas is topsyturvified. When a magnetic tag 2a has already been attached to an article, a first antenna 1a mounted with an IC chip 3 can be attached to the magnetic tag 2a by way of an overlap portion 50a as shown in Fig. 1C to attain effects equivalent to those by the Fig. 1B structure. Conversely, if the RFID tag or first antenna 1a has already been attached to the article, the attachment form shown in Fig. 1B can be adapted to bring about equivalent effects.

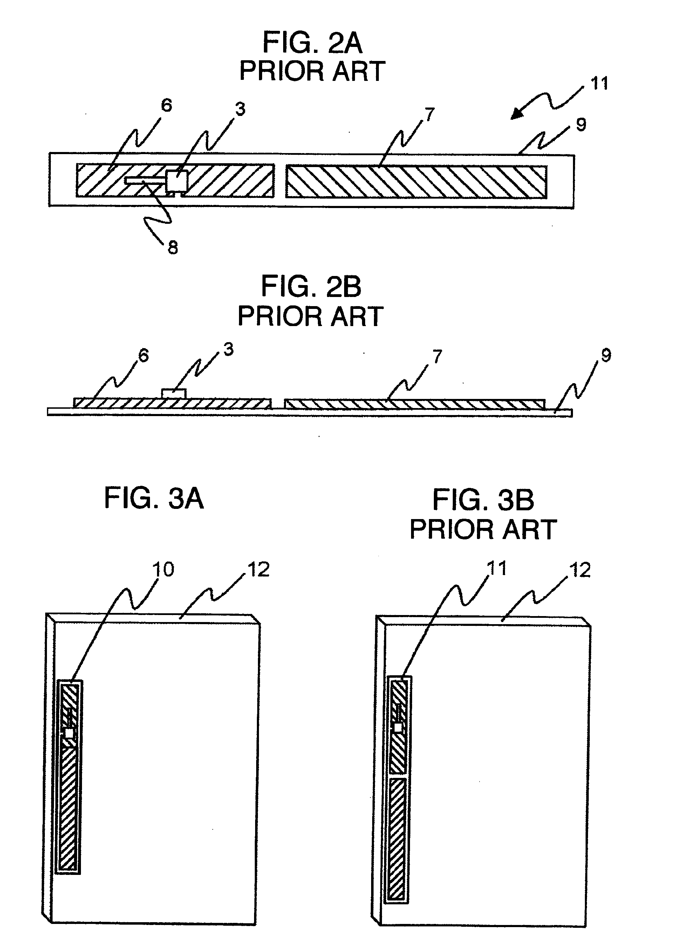

In Figs. 2A and 2B, a tag 11 of conventional structure having a magnetic tag and a RFID tag which are combined in series in the longitudinal direction is illustrated. An IC chip 3 is mounted to an antenna 6 of RFID tag quarter. If the antenna 6 has a dipole structure, its length is electrically 1/2λ (or 1/2λ in terms of electrical angle) of the frequency to be used. Specifically, in a 2.45 GHz band representing the microwave band, the length of the antenna 6 is about 53 mm. This length changes with the material of an article to which the antenna is attached. In the longitudinal direction of the antenna 6, a magnetic tag 7 is disposed without making contact to the antenna 6 and the resulting structure is supported by a base film 9.

If the second antenna 2 having the magnetic tag function as shown in Figs. 1A to 1C and the magnetic tag 7 as shown in Figs. 2A and 2B are identical in length, the RFID tag in Figs. 1A to 1C according to the present embodiment can advantageously be reduced in size by the sum of the difference in length between the first antenna 1 in Figs. 1A to 1C and the antenna 6 for RFID in Figs. 2A and 2B and the spacing between the antenna 6 and the magnetic tag 7.

Next, the communication range for reading information of the IC chip 3 in the RFID tag 10 according to the present embodiment as shown in Figs. 1A to 1C will be compared with that in the tag 11 of conventional structure as shown in Figs. 2A and 2B.

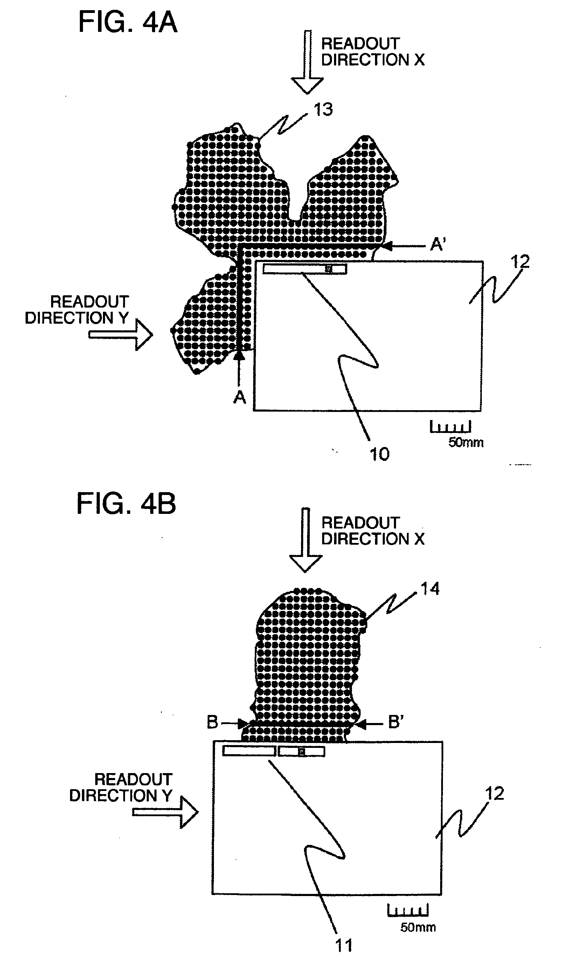

As shown in Figs. 3A and 3B, tags 10 and 11 are attached to A4-size books 12, respectively. The attaching position is nearby the backbone within a predetermined range. Under this condition, communication distances are measured for the two cases by using a reader unit having an output of 300 mW at a frequency of 2.45 GHz and an antenna having an antenna gain of 6 dBi. The antenna width of each of the first and second antennas 1 and 2 is 1.5 mm. Results of measurement are illustrated in Figs. 4A and 4B. With the tag 10 according to the present embodiment, the communication range as represented by a readout range 13 as shown in Fig. 4A can be obtained, indicating that if the reader antenna is present within this communication range, the information of the IC chip 3 can be read. With the tag 11 of the conventional structure, a readout range 14 corresponds to the range from which information of the IC chip 3 can be read as shown in Fig. 4B. Here, a direction orthogonal to the longitudinal direction of the book 12 is defined as readout direction X and a direction parallel to the longitudinal direction is defined as readout direction Y.

The maximum communication distance in the readout direction X is 180 mm in the case of the tag of the present embodiment (Fig. 4A) and 200 mm in the case of the tag of conventional structure (Fig. 4B). The maximum communication distance in readout direction Y is 110 mm in Fig. 4A but the conventional structure in Fig. 4B cannot read the information of the IC chip 3 in this direction. The tag 10 of the present embodiment will be compared in readability with the conventional structure 11. The readable range of the information of the IC chip 3 is measured by moving the reader antenna around the book 12 at a distance of 20 mm therefrom. In Fig. 4A, the range is 330 mm as indicated by solid line A-A' and in Fig. 4B, the range is 140 mm as indicated by solid line B-B', demonstrating that the tag 10 of the present embodiment can read the information of the IC chip 3 within a 2.4 times wider range.

Further, comparison is made in area over which the information of the IC chip 3 can be read, thereby confirming through measurement that the readout area 13 of the tag 10 of the present embodiment is 1.8 times wider than that of the tag 11 of conventional structure.

The tag of the present embodiment is meritoriously features that with the tag structure of the present embodiment, the information of the IC chip 3 can be read in the Y direction corresponding to the longitudinal direction of the tag. With the conventional structure, communication with the IC chip is allowed merely within the rage approximating the width of the antenna 6 in the direction parallel to the tag 11 as will be seen from Fig. 4B. Contrary to this, with the structure of the present embodiment, the information can be read out of the IC chip 3 in the direction parallel to the first and second antennas 1 and 2, in the readout direction X and besides in the readout direction Y opposing the bottom of book 12 as will be seen from Fig. 4A.

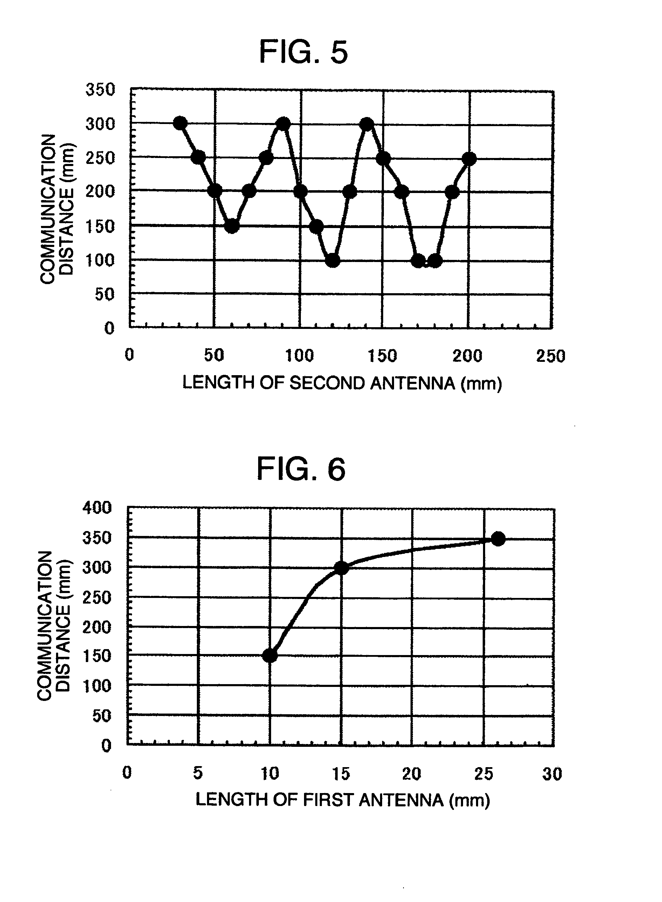

Next, how to optimize the lengths of the first and second antennas will be described with reference to Figs. 5 and 6. Here, the length of first antenna, the length of second antenna and the tag antenna length are defined as L1, L2 and L=L1 + L2, respectively. Results of measurement of the communication range of the RFID tag 10 when L1=25 mm is set and the second antenna length is changed are obtained as graphically illustrated in Fig. 5. The graph shows that the communication range changes depending on the L2 length. This change is maximized at L=(λ/2)Xn (n being integer), that is, when L is integer times of λ/2 where λ/2 is a frequency used. Here, λ changes depending on the dielectric constant of an article the antenna contacts. On the other hand, when the RFID tag length L is fixed and the length L1 of first antenna is reduced from 26 mm (corresponding to 1/2λ), the communication distance is given as graphically shown in Fig. 6, indicating that the communication distance gradually decreases over 26 to 15 mm lengths and begins to fall abruptly at 15 mm. This results from the fact that as the L1 length decreases, the impedance matching between the first antenna and the IC chip 3 becomes mismatched.

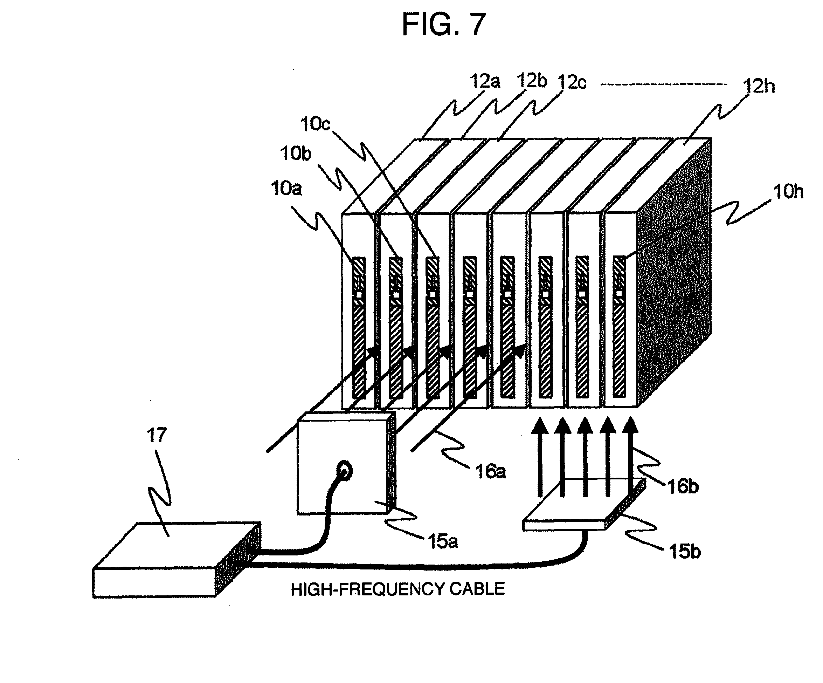

When a plurality of books 12a to 12h are arrayed as shown in Fig. 7, tags 10a to 10h according to the present embodiment can read information stored in the IC chips 3 in response to an electric wave 16a emitted from a reader antenna 15a laid in a direction parallel to the backbone of book and to an electric wave 16b emitted from a reader antenna 15b laid in a direction parallel to the bottom of book. The tag 11 of the conventional structure cannot read information of the IC chip 3 via the book bottom. The individual reader antennas are connected to a reader unit 17.

According to teachings of the present embodiment, for attaching tags to the backbones of plural books and controlling the books, two methods are conceivable in view of communication characteristics of tag, of which one is for reading in the direction X parallel to the backbone of book and the other is for reading in the direction Y of the bottom of book.

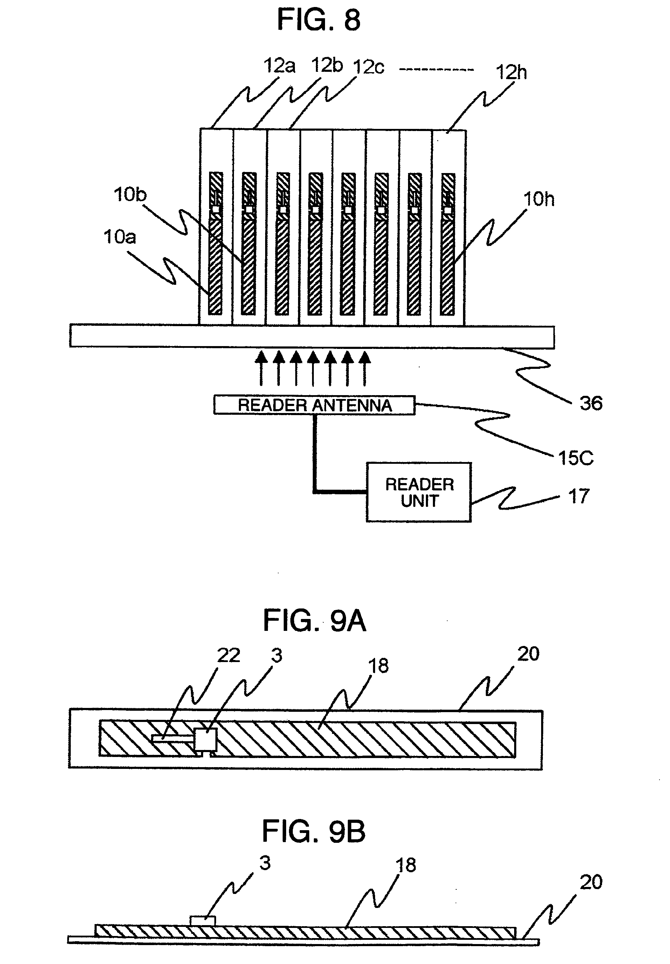

To deal with the inventory control of books, for example, the former method of reading in the direction parallel to the backbone is adaptable. In the case of the real time control of books adapted for controlling what kind of book is now at a shelf on real time base, a method of constantly reading from below the shelf plate is effective. This can be materialized with a configuration constituted by, as shown in Fig. 8, RFID tags 10a to 10h, books 12a to 12h, a reader antenna 15c, a reader unit 17 and a shelf plate 36. Information can be read out of the IC chip 3 by using an electric wave emitted from the reader antenna 15c underlying the shelf plate. With this configuration, goods can be controlled easily on real time base. Through the use of an antenna having a wide emission range, a larger number of books can be controlled. While in Fig. 8 the first antenna and IC chip are so arranged as to align with the end of the RFID tag or the end of book, they may be arrayed at a location in substantially relatively fixed positional relationship.

According to the foregoing embodiment, the first antenna mounted with the IC chip is formed integrally with the second antenna having the magnetic tag function, thus offering the RFID tag having the magnetic tag function and a wider range of communication with the IC chip.

In the present embodiment, the one second antenna 2 is attached to the longitudinally directional end of the first antenna 1 but two second antennas 2 may be attached to the longitudinally directional opposite ends of the first antenna 1, respectively.

### «Second Embodiment»

A second embodiment will be described with reference to Figs. 9A and 9B. In the first embodiment, the first antenna 1 mounted with the IC chip 3 is electrically connected to the second antenna 2 made of a soft magnetic material. In a second embodiment, however, a first antenna 1 and a second antenna 2 are made of the same material, that is, a soft magnetic material having electrical conductivity, thus making the first and second antennas 1 and 2 integral to form an antenna 18 as shown in Fig. 9A. Namely, at least part of the antenna is magnetized. In other words, the antenna includes a magnetic quarter at least partly. In the antenna 18, a slit 22 adapted for impedance matching between the antenna 18 and the IC chip 3 is formed. By so mounting the IC chip 3 to the antenna 18 as to stride over the slit 22, communication characteristics equivalent to those in the first embodiment can be obtained. At the same time, a RFID tag also having the function of magnetic tag can be formed. Structurally, in the present embodiment, the antenna 18 mounted with the IC chip 3 is supported by a base film 20. In the present embodiment, an electrically conductive amorphous alloy foil having a thickness of 200µm is used as the tag. As a material of the base film 20, a PET material (50µm thick) is used. The tag of the present embodiment is viewed laterally thereof as illustrated in Fig. 9B.

Fabricating the RFID tag according to the present embodiment can bring about such an advantage that step of working the first antenna, step of working the second antenna and step of connecting the first and second antennas can be omitted. Further, by making the first antenna integral with the second antenna without overlapping them, an antenna overlap portion where the tag antenna becomes thick can be avoided to fabricate flat and thinner tag. The flattened and thinned tag can improve its durability and easy-to-attach capability to advantage.

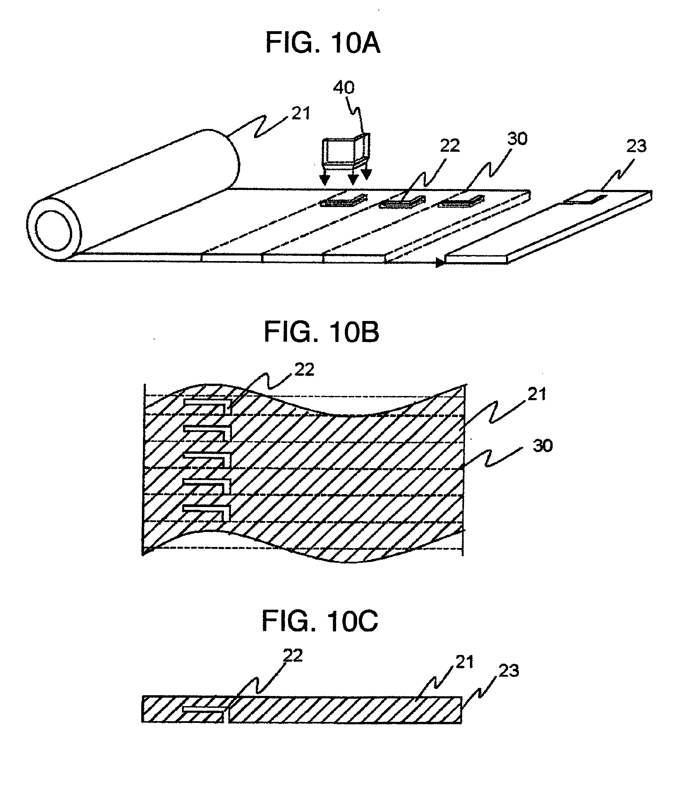

Procedures of fabricating the RFID tag in the present embodiment will be described with reference to Figs. 10A, 10B and 10C. Slits 22 are formed in a soft-magnetic material member or strip 21 having electrical conductivity as illustrated in Fig. 10A. A roll of soft magnetic member 21 is unrolled and an L-shaped slit 22 is formed in the soft magnetic member 21 by using an L-shaped die 40 through stamping.

In this manner, L-shaped slits can be formed sequentially in the soft magnetic member 21 by means of the die 40 as shown in Fig. 10B. In the figure, dotted line 30 indicates a cutting position and by cutting the member along the dotted line 30, an antenna 23 can be formed.

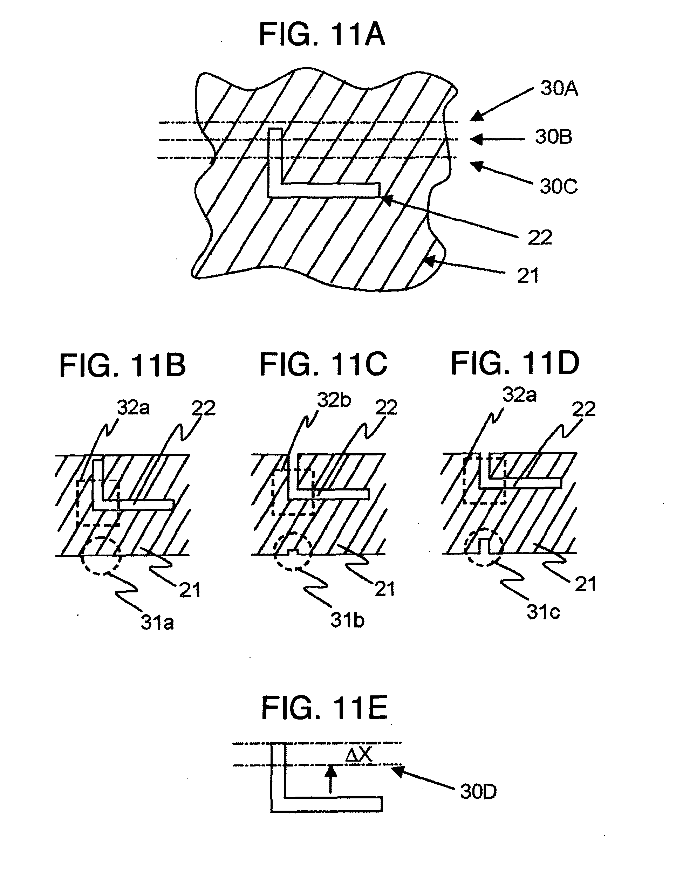

The method of forming the slit 22 will be described in greater detail with reference to Figs. 11A, 11B, 11C, 11D and 11E. The slit formed by the L-shaped stamp work with the die 40 as described previously is combined with a process of cutting for preparation of the antenna 18. Different L-shaped slits 22 can be formed at sequential cutting positions 30A, 30B and 30C on the soft magnetic member 21 as shown in Fig. 11A, providing L-shaped slits 22 as shown in Figs. 11B, 11C and 11D. When cutting is done along cutting position 30A to form an L-shaped slit as shown in Fig. 11B, a stub to be described later cannot be formed from this slit 22, failing to set up impedance matching between the IC chip 3 and the antenna. In Fig. 11C, a desired L-shaped slit results to permit formation of a stub, succeeding in setting up impedance matching with the IC chip 3. In Fig. 11D, the size of a stub decreases but the impedance matching between the IC chip 3 and the antenna can be set up. The tag antenna is partly recessed as shown at 31b or 31c but electrical characteristics do not differ to a large extent.

Accordingly, by setting the L-shaped stamp work formed through stamping and the cutting position 30 appropriately, the desired slit can be formed. Specifically, by making a cutting position 30D clear off the L-shaped edge be larger than a cutting width accuracy ΔX as shown in Fig. 11E, the tag can be fabricated at high yield.

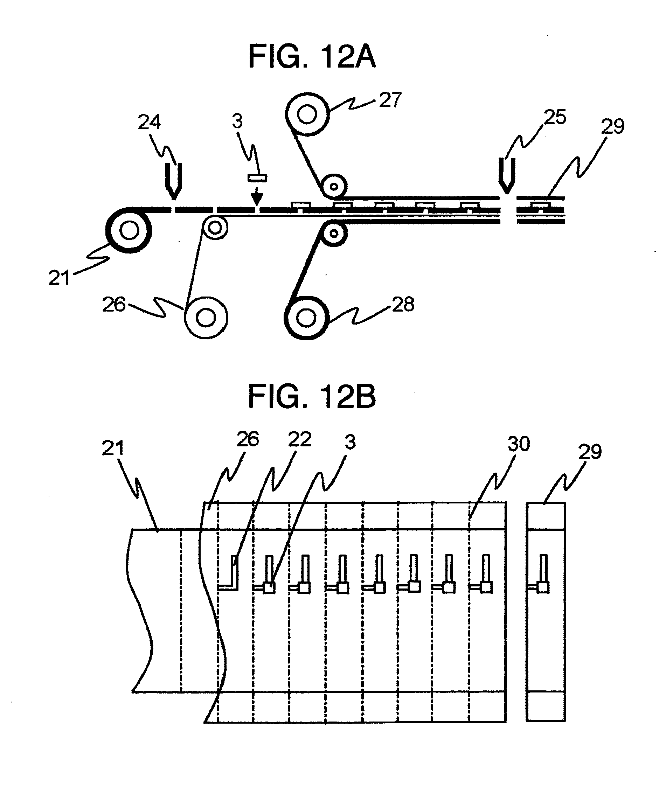

The fabrication process for a RFID tag 29 is illustrated in Figs. 12A and 12B. L-shaped stamp works are formed in the continuous soft magnetic member by using a stamp die 24. Subsequently, the soft magnetic member 21 is backed with a base film 26 and is held thereby. IC chips 3 are mounted to the resulting member. Further, a protective film 27 is applied to cover the chips, a bonding material 28 with peel-off paper is attached to the bottom and the resulting structure is cut by means of a cutting tooth 25, thus completing a RFID tag 29.

For formation of the slit, etching may be employed but the etching method has problems of selection of etching liquid and control of etching rate, proving that the slit formation based on stamping is advantageously applicable without depending on the material to be worked.

### «Third Embodiment»

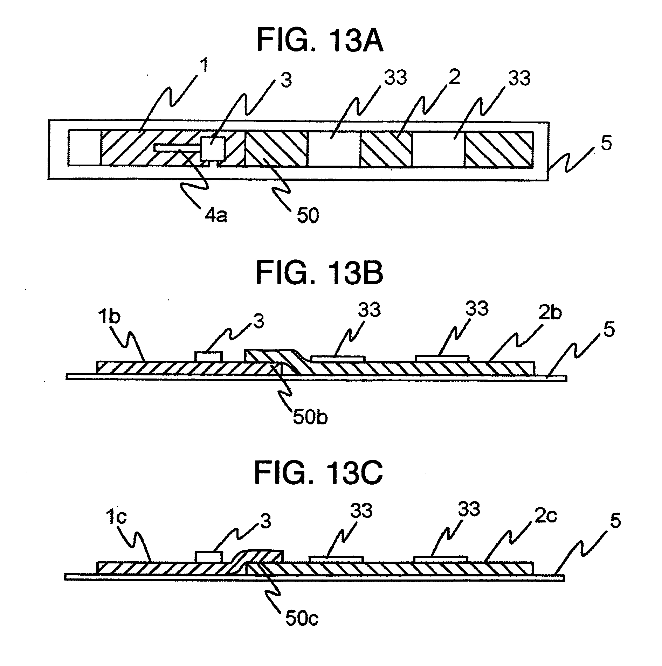

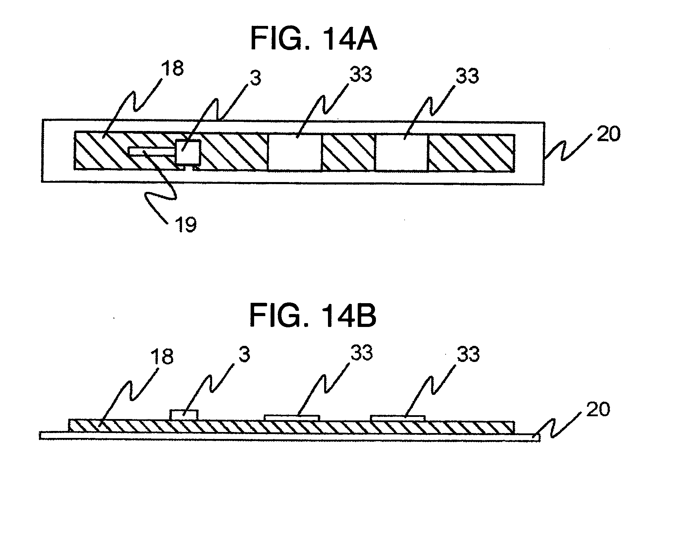

In a third embodiment, a piece of semi-hard magnetic material is attached to the magnetic tag quarter in the first and second embodiments to control the Barkhausen effect of the soft magnetic member. Referring to Figs. 13A, 13B and 13C, the structure will be described. A top view is shown in Fig. 13A and a lateral view of a tag structure of the present embodiment in which the structure in the first embodiment shown in Figs. 1B and 1C is added with the function of the present embodiment is shown in Figs. 13B and 13C. In Figs. 13B and 13C, semi-hard magnetic material pieces are attached onto the second antenna 2. In Figs. 14A and 14B, semi-hard magnetic material pieces are attached to the tag structure shown in connection with the second embodiment. As the semi-hard magnetic material, an Fe alloy or Co alloy is usable and its thickness of 50 to 100µm and length of about 3 mm suffice to have the adequate deactivating performance.

With the structure of the present embodiment, the accuracy of goods control can be promoted. When, in goods takeout control, information is first read out of the IC chip to proceed with a leaving shed process on the database, the semi-hard magnetic member is then magnetized to stop or deactivate the Barkhausen effect. Namely, even when goods passes through the gate, no alarm is raised. This operation can be fulfilled exactly when a series of IC chip information readout process and magnetization process are executed by using the same unit. The IC chip information readout operation can also be done easily and steadily to advantage with the help of the structure of the present embodiment characteristic of the wide range of communication with the IC chip.

### «Fourth Embodiment»

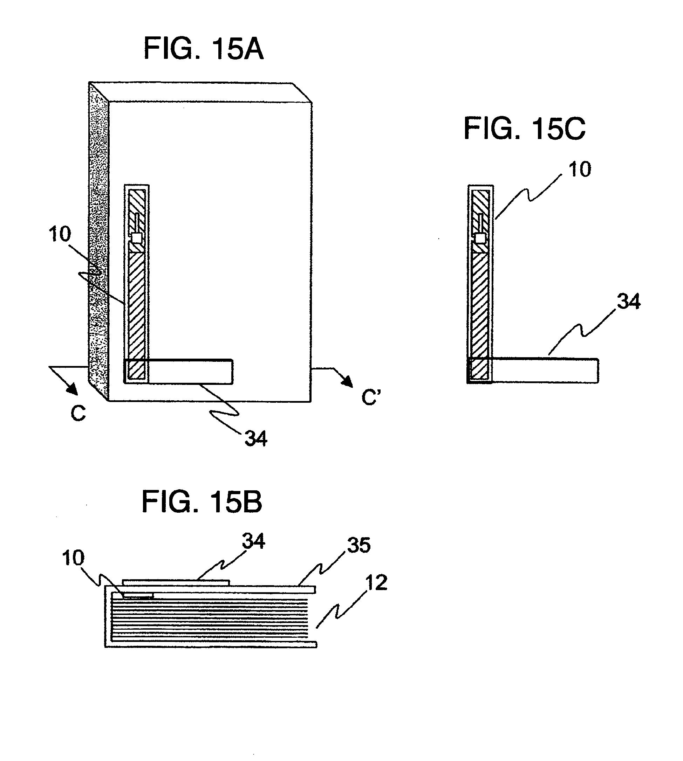

In a fourth embodiment, a third antenna of 1/2λ length is arranged at the end of the RFID tag 10 to extend the communication range in the longitudinal direction (readout direction Y) of the RFID tag 10. This will be explained with reference to Figs. 15A, 15B and 15C. As shown in Fig. 15A, a RFID tag 10 of the present embodiment is attached near the backbone of a book 12. With a view to improve shielding of the RFID tag, the tag is mounted to the rear side of cover 35. The third antenna 34 is attached to the surface of cover of the book. This structure is depicted in sectioned form on C-C' as shown in Fig. 15B. The third antenna 34 is formed of an electrical conductor and fixedly attached to the book by adhesive or bonding agent. As a material of the antenna, such a general use metallic material as Al, Cu or Ag is used. The antenna may alternatively be formed through printing using electrically conductive ink. As shown in Fig. 15C, the RFID tag 10 and the third antenna 34 are so laid as to overlap with each other at their ends. Direct contact is not always required but as the distance between the two antennas increases, coupling is weakened and the effect of the third antenna is degraded. An angle subtended by the antenna of RFID tag 10 and the third antenna may be arbitrary. In order to secure efficient operation, the third antenna 34 and the reader antenna may be so laid as to be parallel to each other. The RFID tag 10 and the third antenna 34 may directly overlap with each other or they may be formed integrally from a soft magnetic material as in the case of the second embodiment.

### «Impedance Matching Between Antenna and IC Chip»

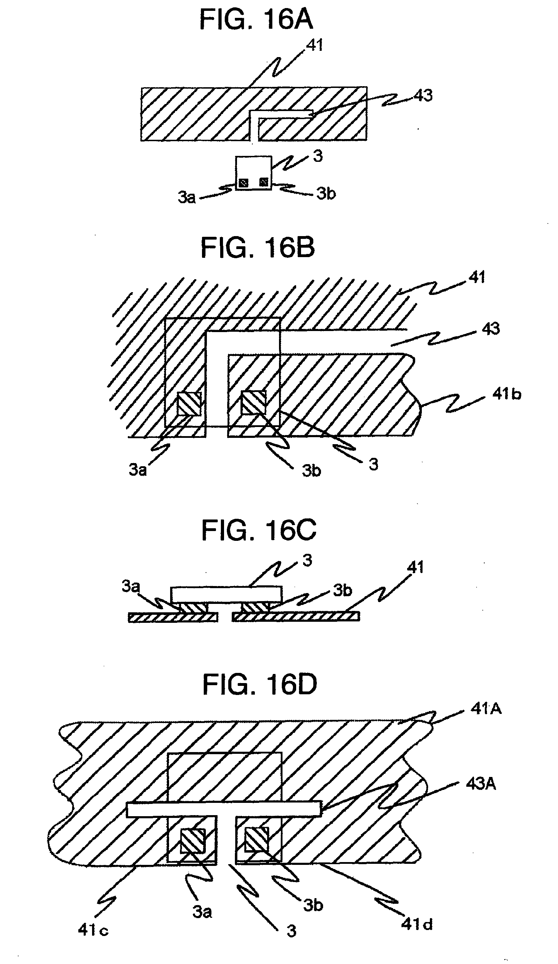

An example will be described in detail where a slit for impedance matching is formed in an antenna 41 and an IC chip 3 is mounted. Procedures for mounting the IC chip 3 at a power feeder of an antenna 41 are shown in Figs. 16A, 16B, 16C and 16D, of which Fig. 16A shows the antenna 41 and a feeder for the IC chip 3, Fig. 16B shows in enlarged perspective view form the feeder when the IC chip 3 is mounted on the antenna 41 and Fig. 16C shows in sectional form a connection portion between the antenna 41 and the IC chip 3.

As shown in Fig. 16A, an L-shaped slit 43 for impedance matching between the IC chip 3 and the antenna 41 is formed in a feeder and its neighborhood of the antenna 41 and a portion surrounded by the L-shaped slit 43 is formed as a stub 41b. The IC chip 3 is provided with the feeder as represented by signal input/output electrodes 3a and 3b so spaced apart as to oppose each other with intervention of the slit 43.

In other words, the width of slit 43 is slightly narrower than the spacing between the signal input/output electrodes 3a and 3b of IC chip 3 and therefore, when the IC chip 3 is mounted to the antenna 41 as shown in Fig. 16B, the IC chip 3 strides over the slit 43 by way of the signal input/output electrodes 3a and 3b so as to be connected to the antenna 41. By connecting the stub 41b as a result of the formation of the slit 43 in series between the antenna 41 and IC chip 3, the stub 41b acts as an impedance component connected in series between the antenna 41 and the IC chip 3. Accordingly, the input/output impedance can be matched between the antenna 41 and the IC chip 3 by means of this impedance component. Namely, a matching circuit can be formed of the slit 43 and the stub 41b. To add, as will be seen from Fig. 16C, the signal input/output electrodes 3a and 3b of IC chip 3 are electrically connected to the antenna 41 by way of gold bumps through supersonic connection process, metal eutectic coupling process or a connection method which provides an intervening anisotropic conductive film (not shown).

Further, as shown in Fig. 16D, a slit to be formed in an antenna 41A can be of T-shape instead of the L-shape. Attachment of an IC chip 3 on a feeder quarter of a T-shaped slit 43A formed in the antenna 41A is illustrated conceptually in Fig. 16D. As will be seen from Fig. 16D, even when the slit 43A is formed in T-shape in the antenna 41A, stubs 41c and 41d can be connected in series between the IC chip 3 and the antenna 41A to achieve impedance matching between the antenna 41A and the IC chip 3 as in the case of the L-shaped slit 43.

It should be further understood by those skilled in the art that although the foregoing description has been made on embodiments of the invention, the invention is not limited thereto and various changes and modifications may be made without departing from the spirit of the invention and the scope of the appended claims.

## Claims

1. A RFID tag for transmitting information recorded on an IC chip by radio, comprising:
said IC chip (3); and
an antenna (1, 2) connected to said IC chip and being magnetized at least partly.

2. A RFID tag according to claim 1, wherein said antenna includes:
a first antenna (1) connected with said IC chip; and
a second antenna (2) electrically connected to said first antenna and made of a magnetic material.

3. A RFID tag according to claim 2, wherein one first antenna or two first antennas are connected to one end or opposite ends of said second antenna in its longitudinal direction.

4. A RFID tag according to claim 2, wherein small pieces (33) of a semi-hard magnetic material are arranged on said second antenna (2).

5. A RFID tag according to claim 2, wherein when the operating frequency has a wavelength of λ, the sum of lengths of said first and second antennas is integer times of electrical length λ/2.

6. A RFID tag according to claim 5, wherein when the operating frequency has a wavelength of λ, the electrical length of said first antenna is λ/4 or less.

7. A RFID tag according to claim 2, wherein said first and second antennas are electrically connected by overlapping them each other or through electrostatic coupling by way of an adhesive.

8. A RFID tag according to claim 2, wherein said first antenna includes a matching circuit (43; 41b) for performing matching between said first antenna and the output of said IC chip, said matching circuit being materialized by a slit (43) formed in said first antenna and a stub (41b) formed by the slit.

9. A RFID tag according to claim 8, wherein said slit is formed in an L-shape or T-shape, and said IC chip is mounted to said first antenna such that its terminals (3a, 3b) are separated by said slit (43).

10. A RFID tag according to claim 2, wherein a third antenna (34) is so arranged as to intersect the longitudinal direction of said RFID tag (10).

11. A RFID tag according to claim 10, wherein said third antenna (34) intersects said second antenna (2) at an end thereof.

12. A RFID tag according to claim 10, wherein when the operating frequency has a wavelength of λ, the electrical length of said third antenna is integer times of λ/2.

13. A method of fabricating a RFID tag comprising the steps of:
forming slits (22) in an antenna member (21) of soft magnetic material;
attaching a base film (26) to the antenna member;
mounting IC chips (3) to the antenna member;
mounting semi-hard magnetic pieces (33) to the antenna member;
applying an attaching adhesive (28) to the rear surface of tag;
attaching a protective film (27) for protecting the IC chips to the antenna member; and
cutting the antenna member to provide separate tags (29).

14. A RFID fabricating method according to claim 13, wherein in said slit forming step, the slits are formed by stamping.

15. A RFID tag fabricating method according to claim 13, wherein in said cutting step, the distance from the slit end to the cutting position is made larger than the accuracy (ΔX) of cutting position of a cutting unit.
